# EUROPEAN PATENT SPECIFICATION

(11) **EP 2 899 441 B1**
(45) Date of publication and mention of the grant of the patent: **14.08.2019**
(21) Application number: 13839851.6
(22) Date of filing: 13.05.2013
(51) Int. Cl.: F16L 19/08, F16L 19/12

(54) **PIPE JOINT STRUCTURE**
ROHRVERBINDUNGSSTRUKTUR
STRUCTURE DE RACCORD DE TUBE

(30) Priority: 19.09.2012 JP 2012205647; 07.11.2012 JP 2012245025; 30.11.2012 JP 2012262696
(43) Date of publication of application: 29.07.2015
(73) Proprietor: Inoue Sudare Co., Ltd., Kawachinagano-shi Osaka 586-0086 (JP); Higashio Mech Co., Ltd., Kawachinagano-shi Osaka 586-0012 (JP)
(72) Inventor: INOUE, Hiroshi, Kawachinagano-shi Osaka 586-0086 (JP)
(74) Representative: Hoffmann Eitle
(86) International application number: PCT/JP2013/063279
(87) International publication number: WO 2014/045632

(56) References cited:
- DE-A1- 1 815 840
- DE-A1- 4 229 502
- JP-A- H10 185 027
- JP-A- 2002 327 876
- JP-A- 2002 340 250
- JP-A- 2006 329 436
- JP-U- H01 180 088
- US-A- 2 287 889
- US-A- 3 055 684
- US-A- 6 073 976

## Description

### FIELD OF THE INVENTION

This invention relates to a pipe joint construction.

### BACKGROUND ART

A flared joint is widely used as a kind of pipe joint (refer to Patent Document 1, for example).

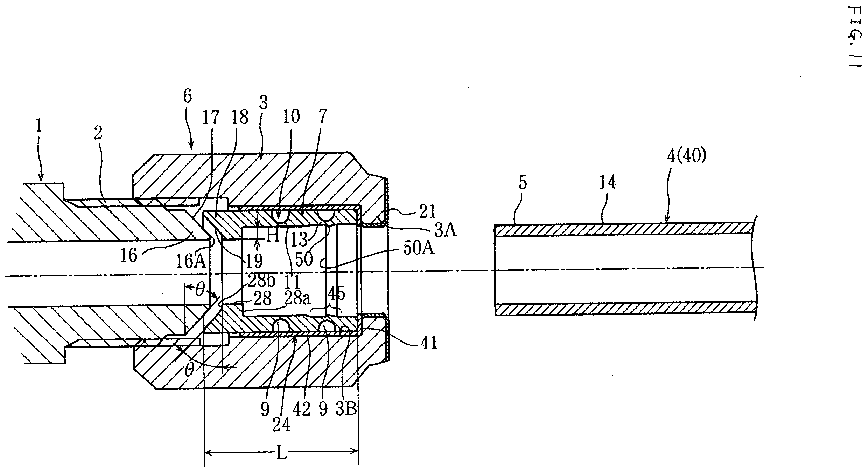

Generally, as shown in figure 11, the flare joint has a construction in which a flared end portion 37, formed by plastic work of an end portion of a copper pipe in a tapered configuration enlarging in diameter, is held between a tapered face 31 of a joint main body 30 with a male screw 32 and a tapered face 34 of a cap nut 33 screwed to the male screw 32 of the joint main body 30, and sealed by press-fitting force.

However, it is eagerly desired that economical and light aluminum, not expensive and heavy copper, be used as the material of the pipe 35. When the pipe 35 is composed of aluminum, there is a disadvantage that flare work is difficult. Also in the case of copper pipe, there is a disadvantage that piping work efficiency is hindered because the flare work has to be conducted on working sites. And, although various pipe joint constructions are proposed to avoid these problems, there are also disadvantages that number of parts is large, parts of complicated shape are necessary, and much labor is required to assemble.

### PRIOR ART DOCUMENT

### PATENT DOCUMENT

Patent document 1 : Japanese Patent Provisional Publication NO. 2005-42858.

Further, US 2,287,889 A discloses a joint comprising two tubular portions in telescoped relation, the inner portion being deformable and the outer portion having a conical outwardly enlarged mouth, a conical compression ring of smaller angle than said mouth received in and having an external annular groove within the latter, said compression ring surrounding said inner member, and a nut threaded on said outer portion engaging and wedging said ring in said mouth and collapsing said ring circumferentially inwardly in the zone of said groove whereby a mating circumferential indentation is formed in said inner portion.

US 3,055,684 A discloses a flareless tube coupling, the combination of a pair of threadedly engaged members of which one member has a tube receiving cavity with an abutment stop for the end of the line, said members defining therebetween an annular chamber that includes axially spaced end walls constituted by the respective members and of which at least one is a frusto-conical wedge surface; and a tubular ferrule of metal similar to that of the tube in such chamber having one end thereof confronting said wedge surface so as to be radially contracted thereby into sealing engagement with a tube positioned within said ferrule and against said abutment stop when said ferrule is moved axially against said wedge surface, said ferrule being formed with a radially thickened rigid portion engaged with said other end wall whereby said ferrule is thus moved axially with respects to the tube upon screwing together of said members, said ferrule also being formed with a relatively deep peripheral groove which leaves but a very thin weakened tubular section of radial thickness in the vicinity of 1/50 to 1/100 of the outside diameter of the tube, and which is adjacent to said thickened portion, said weakened tubular section, upon screwing together of said members, collapsing radially inwardly to form a tube-contacting rib at a region spaced axially from such one end of said ferrule and also spaced axially from the end of said thickened rigid portion that is engaged by said other end wall, said tube-contacting rib, as an incident of collapsing of said weakened tubular section, having a tube-contacting surface of "orange peel" like appearance which tends to seize or gall on the surface of the tube in the nature of a cold weld with said rib and tube in nascent metal-to-metal contact as said rib is caused to slide axially along the surface of the tube as the is held against the stop and as such one end of said ferrule is radially contracted into sealed engagement with the tube.

A similar joint is disclosed in DE 18 15 840 A2 and US 2,287,889 A1.

### OUTLINE OF THE INVENTION

### PROBLEMS TO BE SOLVED BY THE INVENTION

Problems to be solved are; flare work on an aluminum pipe is difficult. Also in the case of copper pipe, working efficiency on piping work sites is hindered by the flare work. And, in various pipe joint constructions to avoid these problems, number of parts is large, parts of complicated shape are necessary, and much labor is required to assemble.

### MEANS FOR SOLVING THE PROBLEMS

A pipe joint construction according to the present invention is defined by the combination of features of claim 1. Dependent claims relate to preferred embodiments. Therefore, in the pipe joint construction related to the present invention, a cylindrical compressed deformation sleeve, stored within a cap nut and having a concave peripheral groove on a peripheral face, is provided, a bottom thin wall portion of concave peripheral groove is formed on an inner portion of the concave peripheral groove in the compressed deformation sleeve, and, the bottom thin wall portion, receiving compressing force in axial direction by screwing the cap nut, is plastically deformed as to protrude to a radial inner direction with reducing a width dimension of the concave peripheral groove to 0 to bite into a peripheral face of an inserted aluminum pipe for stopping the aluminum pipe.

And, a cylindrical compressed deformation sleeve, stored within a cap nut and having a concave peripheral groove on a peripheral face, is provided, a bottom thin wall portion of concave peripheral groove is formed on an inner portion of the concave peripheral groove in the compressed deformation sleeve, and, the bottom thin wall portion, receiving compressing force in axial direction by screwing the cap nut, is plastically deformed as to protrude to a radial inner direction with reducing a width dimension of the concave peripheral groove to 0 to bite into a peripheral face of an inserted copper pipe for stopping the copper pipe.

And, an inner peripheral face of the compressed deformation sleeve is formed as a smooth peripheral face on an area corresponding to the bottom thin wall portion and its near portion.

And, a pipe joint construction, provided with a joint main body with a male screw and a cap nut screwed to a male screw of the joint main body to connect an aluminum pipe, has a cylindrical compressed deformation sleeve, stored in an inner storing space of the cap nut and having a concave peripheral groove on a peripheral face, in which a bottom thin wall portion of concave groove, receiving compressing force in axial direction from the joint main body and the cap nut when the cap nut and the male screw of the joint main body are screwed, is plastically deformed in a radial inner direction to bite into a peripheral face of an inserted aluminum pipe for stopping the aluminum pipe.

And, the compressed deformation sleeve is composed of aluminum or copper covered with aluminum.

And, a pipe joint construction, provided with a joint main body with a male screw and a cap nut screwed to a male screw of the joint main body to connect an copper pipe, has a cylindrical compressed deformation sleeve, stored in an inner storing space of the cap nut and having a concave peripheral groove on a peripheral face, in which a bottom thin wall portion of concave groove, receiving compressing force in axial direction from the joint main body and the cap nut when the cap nut and the male screw of the joint main body are screwed, is plastically deformed in a radial inner direction to bite into a peripheral face of an inserted copper pipe for stopping.

And, the compressed deformation sleeve is composed of copper. And, the concave groove is (preferably) U-shaped.

And, a sealing layer is preliminarily formed unitedly with the inner peripheral face of the compressed deformation sleeve to make tight seal state in the biting.

And, the compressed deformation sleeve has a sealing groove on the inner peripheral face and a sealing material is set into the sealing groove

And, it is also preferable to dispose a cylindrical cover member for promotion of relative rotational slide between an inner peripheral face of the cap nut and a peripheral face of the compressed deformation sleeve.

And, in the present invention, a cylindrical compressed deformation sleeve, stored within a cap nut and having a concave peripheral groove on a peripheral face, is provided, a bottom thin wall portion of concave peripheral groove is formed on an inner portion of the concave peripheral groove in the compressed deformation sleeve in a non-compressed state, and a small protrusion is formed on a sleeve inner peripheral face side of the bottom thin wall portion, the bottom thin wall portion, receiving compressing force in axial direction by screwing the cap nut, is plastically deformed as to protrude to a radial inner direction with reducing a width dimension of the concave peripheral groove to 0 to bite into a peripheral face of an inserted aluminum pipe for stopping the aluminum pipe, and, the small protrusion shows increasing function of anti drawing force to increase resistance against drawing.

And, in the present invention, a cylindrical compressed deformation sleeve, stored within a cap nut and having a concave peripheral groove on a peripheral face, is provided, a bottom thin wall portion of concave peripheral groove is formed on an inner portion of the concave peripheral groove in the compressed deformation sleeve in a non-compressed state, and a small protrusion is formed on a sleeve inner peripheral face side of the bottom thin wall portion, the bottom thin wall portion, receiving compressing force in axial direction by screwing the cap nut, is plastically deformed as to protrude to a radial inner direction with reducing a width dimension of the concave peripheral groove to 0 to bite into a peripheral face of an inserted copper pipe for stopping the copper pipe, and, the small protrusion shows increasing function of anti drawing force to increase resistance against drawing.

And, it is also preferable on some cases to form the small protrusion with plural notched portions as to be divided along an arc, and construct the small protrusion as to show preventing function of pipe rotation in the state biting into the peripheral face.

### EFFECTS OF THE INVENTION

According to the pipe joint construction of the present invention, in both cases of aluminum pipe which is difficult to be plastically worked, and copper pipe which requires conventional flare work, it is unnecessary to conduct flare work on end portions, and working efficiency is high. Further, connection (piping) showing strong drawing force and sealability can be swiftly and easily conducted only with screwing the cap nut. And, the number of parts is small, the configurations of parts are simple, and the assembly is easy. Especially, the pipe joint construction is appropriate for piping for cooling media.

### BRIEF DESCRIPTION OF THE DRAWINGS

[Figure 1] A cross-sectional front view showing an unconnected state of a pipe of a first embodiment of the present invention.
[Figure 2] A cross-sectional front view showing an intermediate state
   during the formation of a connection.
[Figure 3] A cross-sectional front view showing a compressed deformation sleeve.
[Figure 4] A cross-sectional front view showing a cap nut.
[Figure 5] A cross-sectional front view showing an unconnected state of a pipe of a second embodiment of the present invention.
[Figure 6] A cross-sectional front view showing an intermediate state during the formation of a connection.
[Figure 7] A cross-sectional front view showing a compressed deformation sleeve.
[Figure 8] A cross-sectional front view showing an unconnected state of a pipe of a third embodiment of the present invention.
[Figure 9] A cross-sectional front view showing an intermediate state during the formation of a connection.
[Figure 10] A cross-sectional front view -showing a compressed deformation sleeve and a cover member.
[Figure 11] A cross-sectional front view showing an unconnected state of a pipe of a fourth embodiment of the present invention.
[Figure 12] A cross-sectional front view showing an intermediate state during the formation of a connection.
[Figure 13] A cross-sectional front view showing a compressed deformation sleeve and a cover member.
[Figure 14] An explanatory view of function.
[Figure 15] A lateral cross-sectional view showing a modification.

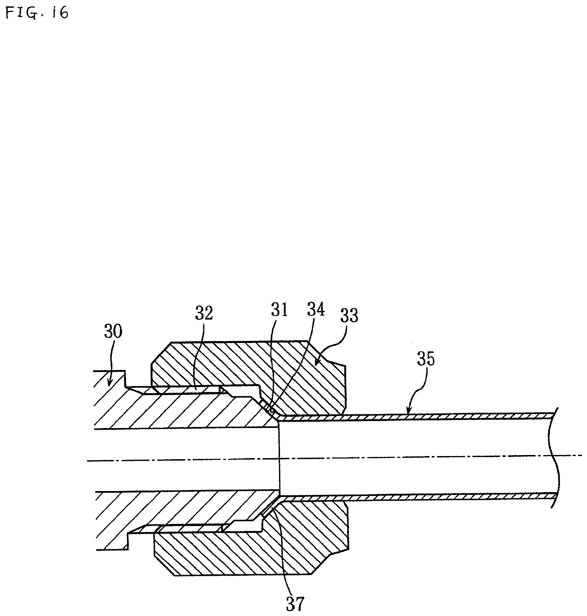

[Figure 16] A cross-sectional front view showing a conventional example.

### EMBODIMENTS OF THE INVENTION

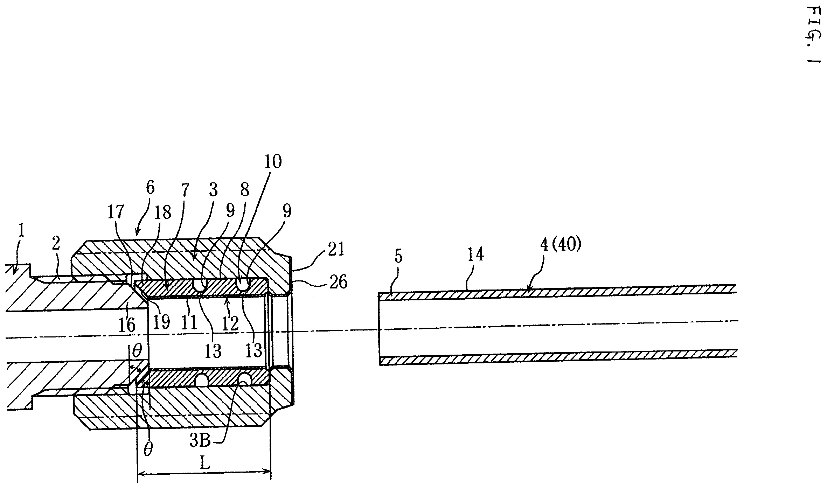

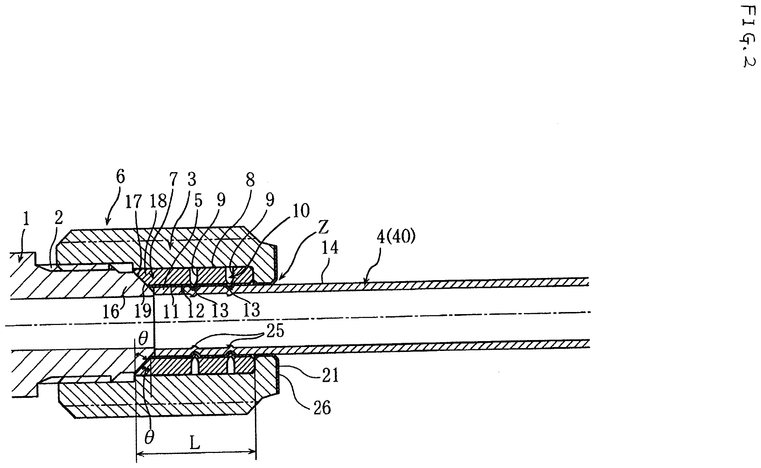

Figure 1 shows a first embodiment of the present invention in a state in which an aluminum pipe is not connected. Figure 2 shows an intermediate state during the formation of a connection. This pipe joint construction is a pipe joint construction provided with a joint main body 1 with a male screw and a cap nut 3 screwed to a male screw 2 to connect an aluminum pipe 4, and a construction especially appropriate for piping of cooling media. The aluminum pipe 4 and a pipe joint 6 are connected without flare work on an end portion 5 of the aluminum pipe 4. The joint main body 1 and the cap nut 3 are, for example, composed of brass. Cooling media of air conditioner, etc. flows in the aluminum pipe 4 and the pipe joint 6.

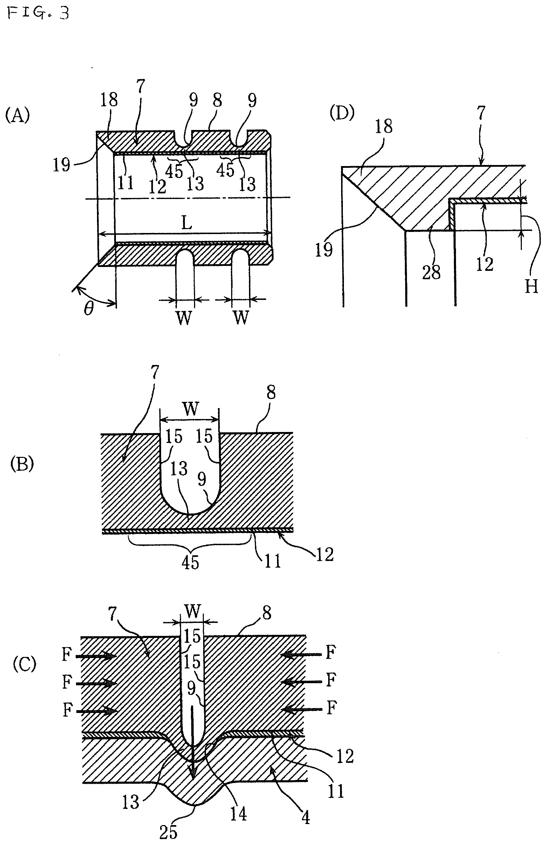

A compressed deformation sleeve 7 of aluminum is shown in figure 3(A). The compressed deformation sleeve 7 has two concave peripheral grooves 9 of U-shape on a peripheral face 8. As shown in figure 1 and figure 2, the compressed deformation sleeve 7 is stored in an inner storing space 10 of the cap nut 3.

As shown in figure 3 (A)(B), the construction preliminarily has a sealing layer 12 unitedly with an inner peripheral face 11 of the compressed deformation sleeve 7. The sealing layer 12 is formed by painting fluorescent resin such as PTFE, for example. In the compressed deformation sleeve 7 in a free state in figure 3(B), a bottom thin wall portion 13 of concave groove, receiving compressing force (fastening force) F in axial direction from the joint main body 1 and the cap nut 3 when the cap nut 3 (refer to figure 1 and figure 2) and the male screw 2 of the joint main body 1 are screwed, is plastically deformed in the radial inner direction as shown in figure 3(C) to bite into the peripheral face 14 of the inserted aluminum pipe 4 for stopping the aluminum pipe 4 (having drawing resistance to prevent drawing out). In this case, as shown in figure 2 and figure 3(C), the inner peripheral face of the aluminum pipe 4 is also plastically deformed in a radial inner direction to form a small protrusion 25. A width dimension W of the concave peripheral groove 9 is reduced in the plastic deformation. And, the width dimension W is in accordance with the present invention reduced to 0(namely, side faces 15 are press-fit, not shown in figures). And, a tight seal state is made by the sealing layer 12 in biting. Figure 3(C) shows an intermediate state.

In the embodiment shown in figure 1, figure 2, and figure 3(A), the inner peripheral face 11 of the sleeve 7 is formed as a smooth peripheral face in non-compressed state. However, in the present invention, an area of the axial direction 2 times larger than the width dimension W of the concave peripheral groove 9 is defined as an area 45 corresponding to the bottom thin wall portion 13 and its near portion, and it is sufficient (to show anti drawing force) as far as the area 45 is formed into an approximately smooth peripheral face.

As shown in figure 1 and figure 2, the joint main body 1 has a tapered face 17 on an end portion 16 (for example, has the same configuration as that of a joint main body used for a flared pipe joint of JIS B8607). As shown in figure 3(A), and figure 1 and figure 2, the compressed deformation sleeve 7 has a tapered face 19 for press-fit sealing (of same inclination angle *θ*) corresponding to the tapered face 17 of the joint main body 1 on an end portion 18. The tapered face 17 and the tapered face 19 for press-fit sealing make tight sealing function by press fitting similarly to the conventional pipe joint construction of flared pipe joint.

Figure 3(D) is an enlarged cross-sectional view of a principal portion showing a modification in which an inner brim portion 28 for reinforcement protrudes in the radial inner direction to prevent generation of excessive plastic deformation (in the radial outer direction) of the end portion 18 when the (above-mentioned) tapered face 17 and the tapered face 19. It is preferable to make a staged dimension H corresponding to an inner height of the inner brim portion 28 approximately same as the thickness dimension of the pipe 4 (40) in figure 1 and figure 2.

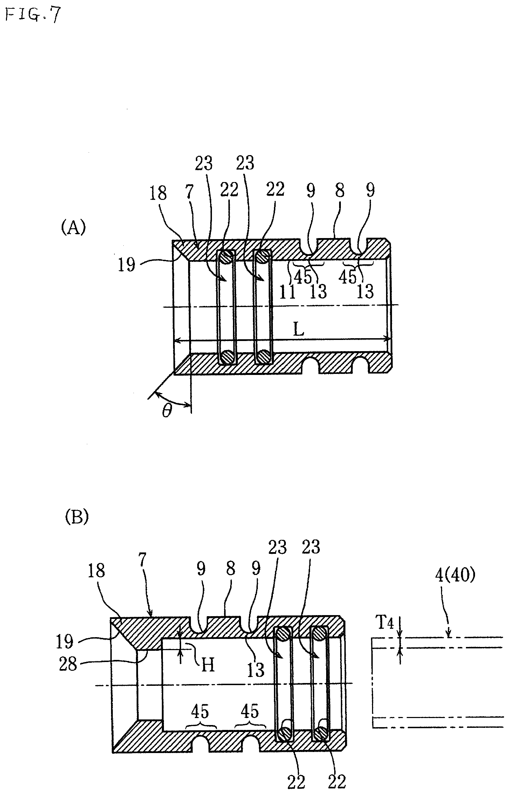

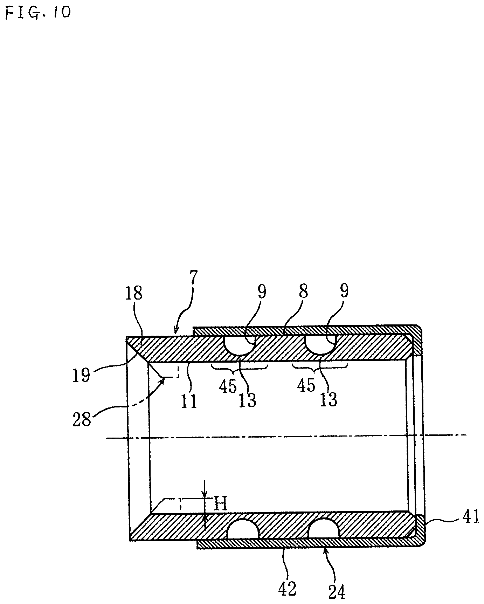

Further, in another embodiment shown in figure 10 described later, it is also preferable to make the inner brim portion 28 for reinforcement protrude as two-dot broken lines, and, inner brim portion 28 for reinforcement protrudes as in another embodiment shown in figure 7(B) and its staged dimension H is approximately same as the thickness dimension T₄ of the pipe 4 (40) .

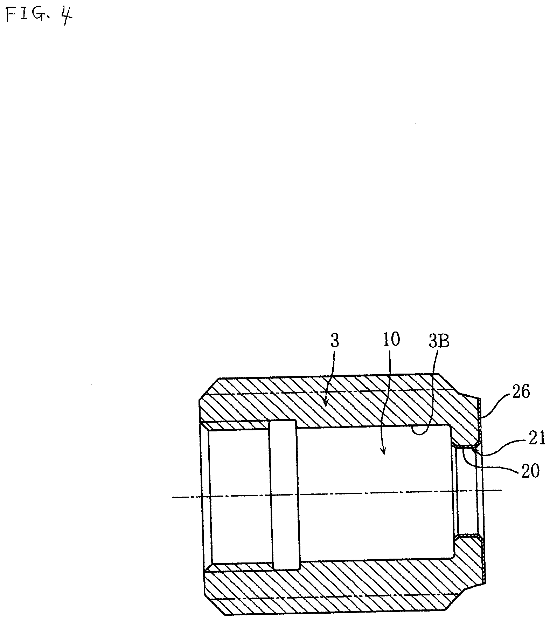

As shown in figure 4, at least an inner face receiving hole 20 and an outer end face 26 of the cap nut 3 are painted with insulating resin 21 to prevent electric corrosion. Even if the cap nut is composed of metal different from aluminum, such as brass, electric corrosion between different kinds of metals. The resin 21 is, for example, preferably composed of epoxy resin.

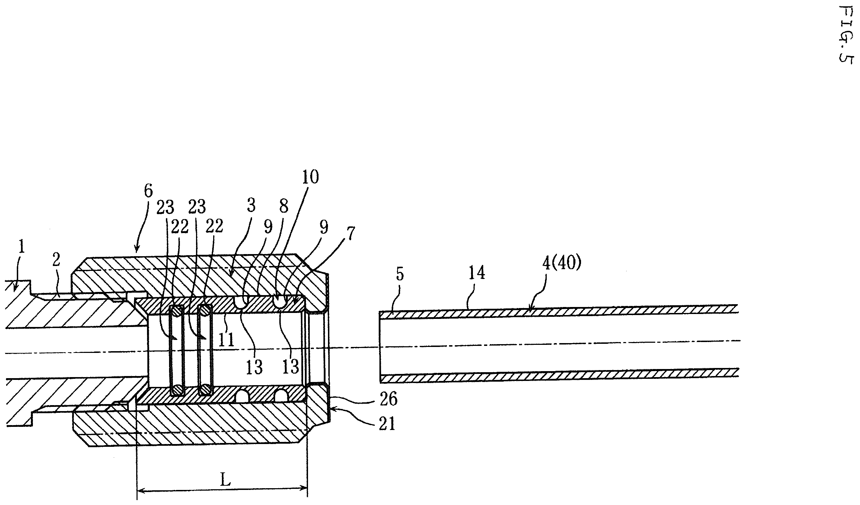

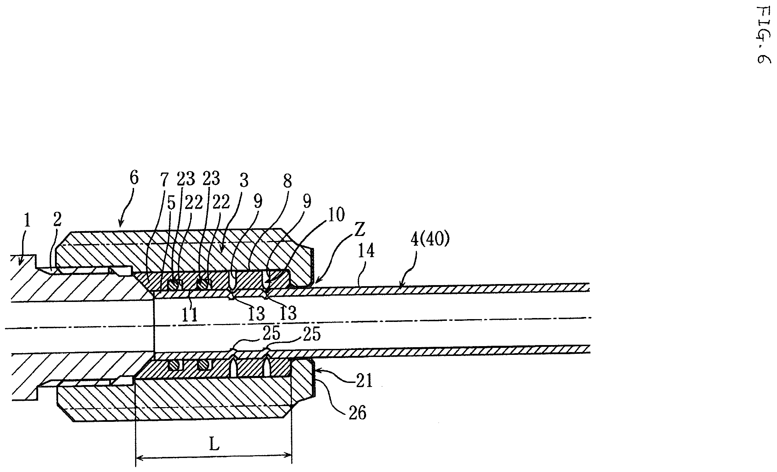

Figure 5 shows a state before the aluminum pipe of a second embodiment of the present invention is connected. Figure 6 shows an intermediate state during the formation of a connection.
As shown in figures 5 through 7, the compressed deformation sleeve 7 has two sealing grooves 22 on the inner peripheral face 11. A sealing material 23 such as an 0-ring is set into the sealing groove 22. The inner peripheral face 11 of the compressed deformation sleeve 7 does not have a sealing layer (a length dimension L of the compressed deformation sleeve 7 in axial direction is longer than that of the first embodiment). Other constructions are same as that of the first embodiment.

Figure 7(B) is a modification of figure 7(A), figure 5, and figure 6 in which the position of the sealing material 23 (sealing groove 22) and the position of the concave peripheral groove 9 are exchanged in the axial direction. With this construction as in figure 7(B), sealing function by press fitting of the bottom thin wall portion 13 of the concave peripheral groove to the peripheral face 14 of the pipe 4 (40) works in a first stage under the state of completed pipe connection (Figure 6 shows an intermediate state), and certain sealing function can be made by the sealing material 23 (on the radial outer side) when the above sealing function is insufficient.

In the above-described first and second embodiments, although it is preferable to use aluminum for the sleeve 7 same as the material of the aluminum pipe 4, the sleeve 7 may be composed of copper covered with an aluminum layer on outer face (by plating, flame coating, etc.) when desired. That is to say, the latter can be chosen as far as electric corrosion is prevented.

Next, another embodiment is described. The material of the sleeve 7 is copper when a copper pipe 40 is used as the pipe in the first embodiment shown in figure 1 through figure 3. Explanation of the configuration and construction of the sleeve 7 is omitted because they are same as that in the case described with figure 1 through figure 3.

Next, still another embodiment is described. The material of the sleeve 7 is copper when a copper pipe 40 is used as the pipe in the second embodiment shown in figure 5 and figure 6. Explanation of the configuration and construction of the sleeve 7 is omitted because they are same as that in the case described with figure 5 and figure 6.

In the both embodiments, when the pipe is the copper pipe 40, the cap nut 3 shown in figure 4 may be made of copper, and the film of the resin 21 may be omitted in some cases.

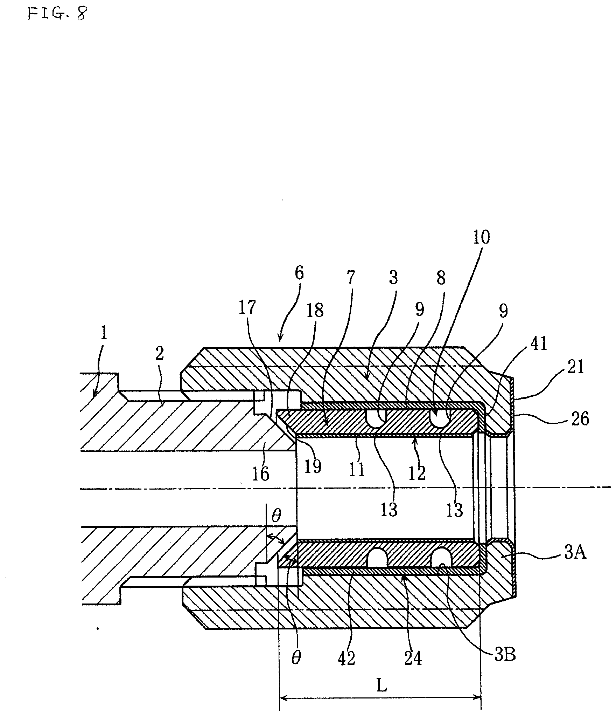

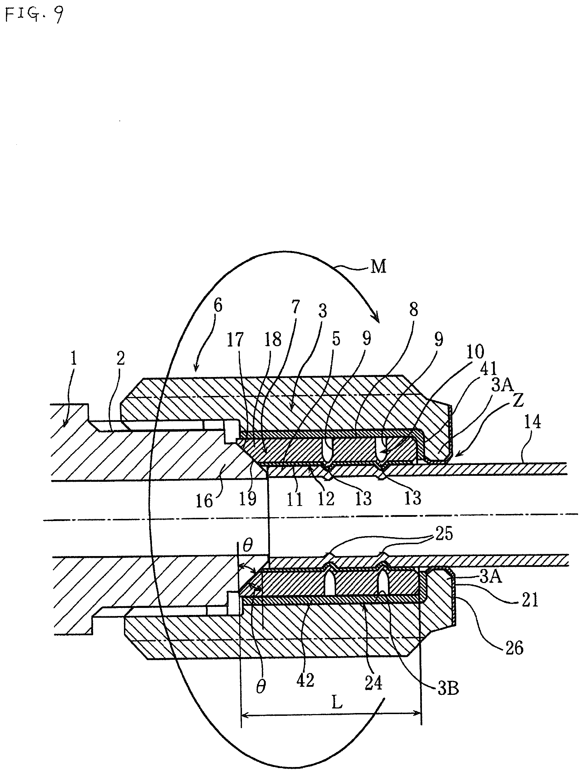

Figure 8 shows a third embodiment of the present invention in a state in which an aluminum pipe is not connected. Figure 9 shows an intermediate state during the formation of a connection. In figure 8 through figure 10, a cover member 24 of hard metal such as stainless steel (or hard plastic) is mounted to the compressed deformation sleeve 7. That is to say, the cover member 24 is disposed (set) between the inner peripheral face 3B of the cap nut 3 and the peripheral face of the sleeve 7. The cover member 24 is composed of a cylinder portion 42 having a length dimension in axial direction slightly shorter than the length dimension L of the sleeve 7, and an inner brim portion 41 continuously connected to the outer end of the cylinder portion 42.

The cover member 24 is cylindrical as to reduce frictional resistance (resistance by press fitting) between the inner peripheral face 3B of the cap nut 3 and the peripheral face of the compressed deformation sleeve 7, and promote sliding (namely, to promote relative rotational sliding). Under the state shown in figure 2 and figure 6 in which the cover member 24 is not disposed, when the sleeve 7 is compressed and deformed in the axial direction along with screwing of the cap nut 3 (refer to an arrow M in figure 9), a deformation to increase the outer diameter of the sleeve 7 (in the radial outer direction) is generated, the sleeve 7 strongly press-fit to the inner peripheral face 3B of the cap nut 3 co rotates with the cap nut 3, and the aluminum pipe 4 (copper pipe 40) co rotates simultaneously, and torsion may be generated.

The cover member 24 is made of hard material such as stainless steel, and preferably, made of material of low friction coefficient to prevent the above described co rotation caused by strong press fitting (tight fitting) of the peripheral face of the sleeve 7 and the inner peripheral face of the cap nut 3, and the torsion of the aluminum pipe 4 (copper pipe 40). And, function to prevent electric corrosion of the cap nut 3 and the compressed deformation sleeve 7 is shown in some cases. Further, the above-mentioned inner brim portion 41 also shows a function to reduce the frictional resistance between the outer end face of the sleeve 7 and the inner brim portion 3A of the cap nut 3.

Next, figure 11 through figure 14 show a fourth embodiment of the present invention. Double explanation is omitted because the members of same marks are similarly constructed as in figure 1 through figure 10. So construction and function different from that of figure 1 through figure 10 are specifically described below.

A claw-shaped small protrusion 50 is formed on the sleeve inner peripheral face side on the bottom thin wall portion 13 on one of the two concave peripheral grooves 9 on the outer side of the pipe insertion side.

The small protrusion 50 has an approximately triangular cross-sectional configuration having a staged face 50A directed to the joint main body 1 side on a central portion of the bottom thin wall portion 13 in the axial direction to show increasing function of anti drawing force to increase resistance against drawing. That is to say, the bottom thin wall portion 13 receiving the compressing force F from the cap nut 3 is compressed and deformed, the small protrusion 50 deeply bites into the peripheral face of the aluminum pipe 4 (or the copper pipe 40) with the plastic deformation of U-shape of the bottom thin wall portion 13 to show the increasing function of anti drawing force to increase the anti drawing force of the bottom thin wall portion 13 further.

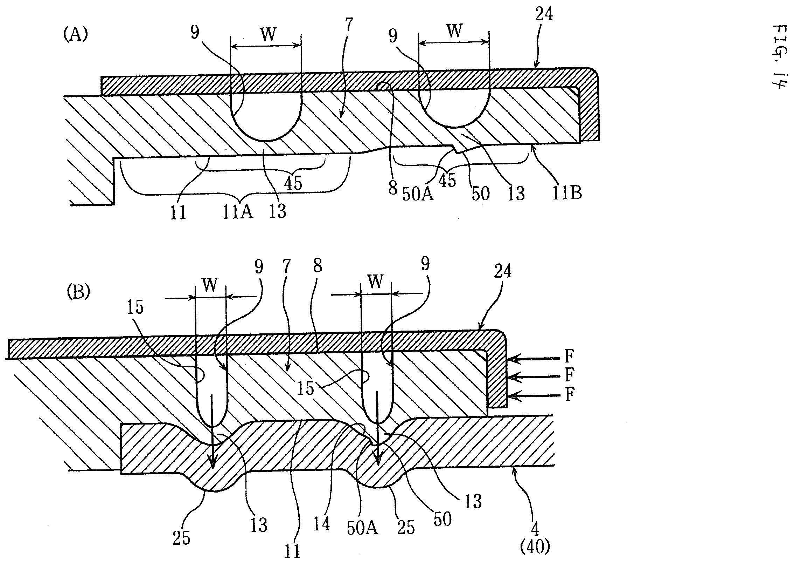

As shown in figure 14(B), while the bottom thin wall portion 13 on the left side (the joint main body 1 side) is curved in U-shape and biting into the peripheral face of the aluminum pipe 4 (or the copper pipe 40), the U-shaped curved portion as a base of the bottom thin wall portion 13 on the right side (outer side) and the small protrusion 50 on the top portion bite together to show the strong anti drawing force.

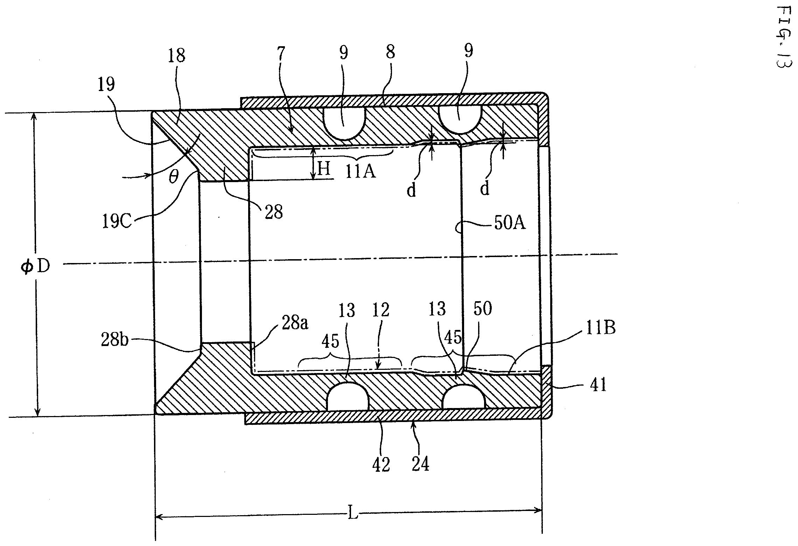

As shown in figure 13, it is desirable to form a large inner peripheral face portion 11B larger than the inner diameter dimension of a basic smooth inner peripheral face portion 11A for a small dimension 2d, the small protrusion 50 is disposed (formed) on a middle position of the large inner peripheral face portion 11B in the axial direction, and the inner diameter dimension of the small protrusion 50 is made the same as the inner diameter dimension of the smooth inner peripheral face portion 11A. That is to say, an escape of a small dimension d (refer to figure 13) is formed on both of the left and right sides (inner and outer sides in the axial direction) of the small protrusion 50.

In the present invention, the configuration of the sleeve 7 is called "approximately smooth" peripheral face configuration even when convexes and concaves of the small dimension d exist as shown in figure 13 under the non-compressed state of the sleeve 7. Therefore, it can be said that the sleeve 7 is formed into "approximately smooth" peripheral face configuration in the area 45 corresponding to the bottom thin wall portion 13 and its near portions also in the embodiment shown in figure 11 through figure 14. The width of the area 45 in the axial direction is defined as 2 times of the concave peripheral groove 9 in the non-compressed state. As described above, it can be said that the inner peripheral face 11 is an approximately smooth peripheral face in the area 45 of the bottom thin wall portions 13 and its near portions of the concave peripheral grooves 9 in the non-compressed state.

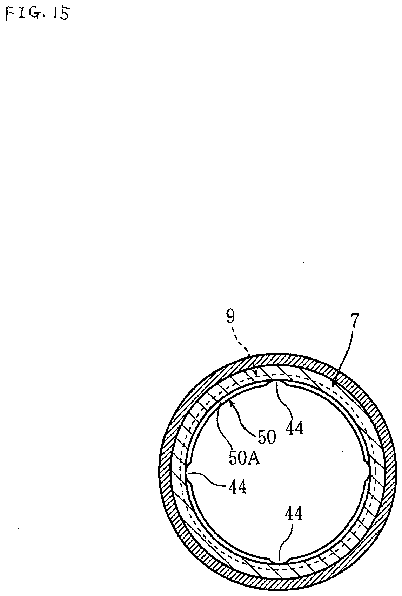

Next, in a modification shown in figure 15, a mark 44 shows a notched portion (non existence portion) of the small protrusion 50, the small protrusion 50 is formed with plural notched portions 44 as to be divided along an arc. Therefore, the small protrusion 50 divided along the arc shows preventing function of pipe rotation in the state biting into the peripheral face 14 of the aluminum pipe 4 (or the copper pipe 40). That is to say, in the intermediate biting state in figure 14(B), portions where the small protrusion 50 exists and portions where the small protrusion 50 does not exists are formed in turn on the positions in the peripheral direction, the pipe 4 or 40 and the sleeve 7 do not rotate relatively around the axis, and the rotation of the pipe 4 or 40 is certainly prevented. With this construction, the pipe 4 or 40 does not rotate even if rotational torque (external force) works on the pipe 4 or 40 after the piping is completed, and leakage of fluid between the biting thin wall portion 13 and the peripheral face 14 as shown in figure 14(B) can be prevented.

And, the number of the concave peripheral grooves 9 is most preferably 2 in the embodiments in figure 11 through figure 15. However, in figure 11 through figure 15, at least one of the concave peripheral grooves 9 is provided with the small protrusion 50 to show the increasing function of anti drawing force on the bottom thin wall portion 13.

To explain additionally, in each of the embodiments in figure 11 through figure 14, the concave peripheral groove 9 certainly has the small protrusion 50 on the bottom thin wall portion 13 in case of one concave peripheral groove 9, one or two concave peripheral grooves 9 have the small protrusion 50 on the bottom thin wall portion 13 in case of two concave peripheral grooves 9, and one, two, or three concave peripheral grooves 9 have the small protrusion 50 on the bottom thin wall portion 13 in case of three concave peripheral grooves 9. Further, the small protrusion 50 having the notched portion 44 as shown in figure 15 may be formed on the bottom thin wall portion 13 of the above-mentioned one or plural concave peripheral grooves 9.

The above-described compressed deformation sleeve 7 of the present invention has a characteristic of being "short cylinder type". "Short cylinder type" is defined as 0.5≦L/D≦3.0 when the outer diameter dimension is D and the length dimension is L. Therefore, one of the characteristics of the present invention is a construction in which the inner peripheral face of short cylinder type receives the compressing force F, the bottom thin wall portion 13 is plastically deformed as to protrude to the radial inner direction to bite into the peripheral face 14 of the inserted aluminum pipe 4 or the copper pipe 40 to form a stable U-shape for stopping, and, the small protrusion 50 shows increasing function of anti drawing force to increase resistance against drawing. The sleeve 7 of "short cylinder type" always holds a stable posture from the non-compressed state to the compressed state, and the local (small) bottom thin wall portion 13, keeping stable middle posture of plastic deformation, can conduct plastic deformation to bite into the pipe as from figure 1 to figure 2, from figure 5 to figure 6, from figure 11 to figure 12, and from figure 14(A) to 14(B) further.

And, the concave peripheral groove 9, other than the U-shape having a large R shown in figures, may be a squared U-shape, and the inner portion of the groove may be protruding or V-shape as far as the concave peripheral groove 9 is U-shaped.

Next, in figure 11 through figure 13, the crosssectional configuration of the inner brim portion 28 is different from that in figure 3(D) and figure 7(B), and this point is described.

A flat staged face at right angles with the axis having a staged dimension H (approximately equal to the thickness dimension of the pipe 4 (40)) corresponds to an inner end face 28a of the inner brim portion 28. And, an inclination line of the tapered face 19 of the inclination angle *θ* is straight (without bent portions) and forming a part of the outer end face of the inner brim portion 28, and an end portion 19C in the inner diameter direction of the inclination line is connected to a flat face portion 28b at right angles with the axis (refer to figure 13).

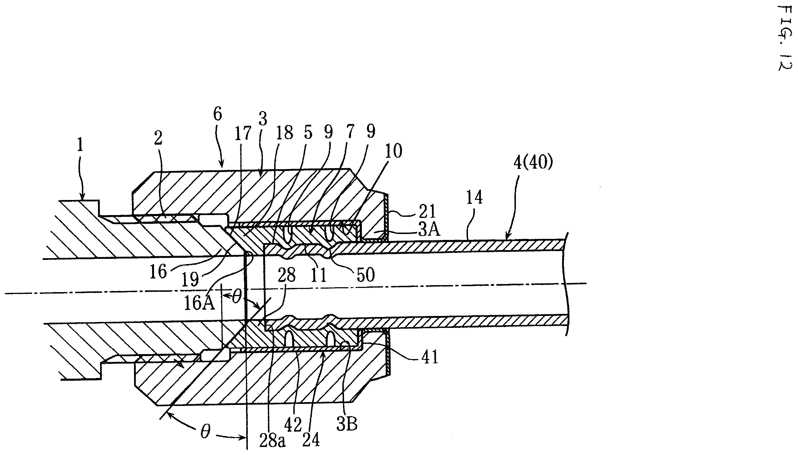

As described above, with the addition of the inner brim portion 28 to the sleeve 7, excessive plastic deformation to enlarge the diameter is prevented by reinforcing function with increased thickness of the end portion 18 of the sleeve 7 when the tapered face 19 is strongly (as in figure 12) press-fit to the tapered face 17. And, when the tapered faces 17 and 19 are press-fit more strongly by further screwing, the above-mentioned flat face portion 28b at right angles with the axis contacts a forth end face 16A of the joint main body 1 to prevent excessive screwing of the cap nut 3 by stopper function, and the excessive plastic deformation to enlarge the diameter is certainly prevented. That is to say, in figures, the inner brim portion 28 can stop the excessive plastic deformation to enlarge the diameter of the end portion 18 (the excessive screwing of the cap nut 3) by the increased thickness (cross-sectional area) and the stopper function by the flat face portion 28b at right angles with the axis which contacts the forth end face 16A.

The number of the U-shaped concave peripheral grooves 9 is most preferably 2. With one U-shaped concave peripheral groove 9, the bottom thin wall portion 13 tends to generate slip (deviation) on the aluminum pipe 4 in the plastic deformation, and it may be difficult to bite to the same position in the axis direction of the pipe, and, with three U-shaped concave peripheral grooves 9, unnecessary stress (inner stress) may remain between each of the U-shaped concave peripheral grooves 9. In the present invention, "aluminum" includes aluminum alloy, and "copper" includes copper system alloy.

In the present invention, which is modifiable, the cover member 24 may be disposed in the embodiment of figure 5 and figure 6 (not shown in figures). Further, the compressed deformation sleeve 7 may have one or three concave peripheral grooves 9 on the peripheral face 8. And, the compressed deformation sleeve 7 may have one sealing groove 22 on the inner peripheral face 11. And, the resin 21 may be painted on the whole surface of the cap nut 3.

As described above, with the present invention, strong connecting (piping) work can be swiftly conducted because the cylindrical compressed deformation sleeve 7, stored within the cap nut 3 and having the concave peripheral groove 9 on the peripheral face 8, is provided, the bottom thin wall portion 13 of concave peripheral groove is formed on an inner portion of the concave peripheral groove 9 in the compressed deformation sleeve 7, and, the bottom thin wall portion 13, receiving compressing force F in axial direction by screwing the cap nut 3, is plastically deformed as to protrude to the radial inner direction with reducing the width dimension W of the concave peripheral groove 9 to 0 to bite into the peripheral face 14 of the inserted aluminum pipe 4 for stopping the aluminum pipe 4. Further, it is unnecessary to conduct flare work on the end portion of the aluminum pipe 4 difficult to be plastically worked, and working efficiency is high. And, the number of parts is small, the configurations of parts are simple, and the assembly is easy.

And, strong connecting (piping) work can be swiftly conducted because the cylindrical compressed deformation sleeve 7, stored within the cap nut 3 and having the concave peripheral groove 9 on the peripheral face 8, is provided, the bottom thin wall portion 13 of concave peripheral groove is formed on an inner portion of the concave peripheral groove 9 in the compressed deformation sleeve 7, and, the bottom thin wall portion 13, receiving compressing force F in axial direction by screwing the cap nut 3, is plastically deformed as to protrude to the radial inner direction with reducing the width dimension W of the concave peripheral groove 9 to 0 to bite into the peripheral face 14 of the inserted copper pipe 40 for stopping the copper pipe 40. Further, it is unnecessary to conduct flare work on the end portion of the copper pipe 40, and working efficiency is high. And, the number of parts is small, the configurations of parts are simple, and the assembly is easy.

And, stable plastic deformation can be conducted on the peripheral face of the pipe 4 (40) because the inner peripheral face 11 of the compressed deformation sleeve 7 is formed as a smooth peripheral face on the area 45 corresponding to the bottom thin wall portion 13 and its near portion.

And, strong connecting (piping) work can be swiftly conducted because in a pipe joint construction (for cooling media, etc.) provided with the joint main body 1 with the male screw and the cap nut 3 screwed to the male screw 2 of the joint main body 1 to connect the aluminum pipe 4, the cylindrical compressed deformation sleeve 7, stored in the inner storing space 10 of the cap nut 3 and having the concave peripheral groove 9 on the peripheral face 8, in which the bottom thin wall portion 13 of concave groove, receiving compressing force F in axial direction from the joint main body 1 and the cap nut 3 when the cap nut 3 and the male screw 2 of the joint main body are screwed, is plastically deformed in the radial inner direction to bite into the peripheral face 14 of the inserted aluminum pipe 4 for stopping the aluminum pipe 4. Further, it is unnecessary to conduct flare work on the end portion of the aluminum pipe 4 difficult to be plastically worked, and working efficiency is high. And, the number of parts is small, the configurations of parts are simple, and the assembly is easy.

And, it is preferable that electric corrosion is not caused to the aluminum pipe 4 because the compressed deformation sleeve 7 is composed of aluminum or copper covered with aluminum.

And, it is not necessary to conduct flare work at all on the end portion of the conventional copper pipe, swift piping work can be conducted, working efficiency can be improved, and a strong construction of completed connection is made because in a pipe joint construction (for cooling media, etc.) provided with the joint main body 1 with the male screw and the cap nut 3 screwed to the male screw 2 of the joint main body 1 to connect the copper pipe 40, the cylindrical compressed deformation sleeve 7, stored in the inner storing space 10 of the cap nut 3 and having the concave peripheral groove 9 on the peripheral face 8, in which the bottom thin wall portion 13 of concave groove, receiving compressing force F in axial direction from the joint main body 1 and the cap nut 3 when the cap nut 3 and the male screw 2 of the joint main body are screwed, is plastically deformed in the radial inner direction to bite into the peripheral face 14 of the inserted copper pipe 40 for stopping the copper pipe 40. Further, the number of parts is small, and the configurations of parts are simple.

And, electric corrosion is not caused to the copper pipe 40 because the compressed deformation sleeve 7 is composed of copper.

And, sealability is good because the sealing layer 12 is preliminarily formed unitedly with the inner peripheral face 11 of the compressed deformation sleeve 7 to make tight seal state in the biting.

And, sealability can be improved and stabilized further because the compressed deformation sleeve 7 has the sealing groove 22 on the inner peripheral face 11 and the sealing material 23 is set into the sealing groove 22. Although rain, etc. tend to stay at the corner portion Z on the outer end face 26 of the cap nut 3, with covering of the insulating resin 21, electric corrosion between different kinds of metal can be prevented from being generated when the pipe is composed of aluminum and the joint main body 1 and the cap nut 3 are composed of metal different from aluminum such as brass.

The inner peripheral face 3B of the cap nut 3 and the peripheral face of the compressed deformation sleeve 7 lightly rotate, the problem of torsion of the aluminum pipe 4 or the copper pipe 40 is consequently solved, and the pipe connection work is certainly made easy because the cylindrical cover member 24 for promotion of relative rotational slide is disposed between the inner peripheral face 3B of the cap nut 3 and the peripheral face of the compressed deformation sleeve 7.

And, strong connecting (piping) work can be swiftly conducted because the cylindrical compressed deformation sleeve 7, stored within the cap nut 3 and having the concave peripheral groove 9 on the peripheral face 8, is provided, the bottom thin wall portion 13 of concave peripheral groove is formed on an inner portion of the concave peripheral groove 9 in the compressed deformation sleeve 7 in the non-compressed state, and the small protrusion 50 is formed on the sleeve inner peripheral face side of the bottom thin wall portion 13, the bottom thin wall portion 13, receiving compressing force F in axial direction by screwing the cap nut 3, is plastically deformed as to protrude to the radial inner direction with reducing the width dimension W of the concave peripheral groove 9 to 0 to bite into the peripheral face 14 of the inserted aluminum pipe 4 for stopping the aluminum pipe 4, and, the small protrusion 50 shows increasing function of anti drawing force to increase resistance against drawing. Further, it is unnecessary to conduct flare work on the end portion of the aluminum pipe 4, and working efficiency is high. And, the number of parts is small, the configurations of parts are simple, and the assembly is easy. Especially, the anti drawing force is remarkably strong for the co-working of the bottom thin wall portion 13 and the small protrusion 50.

And, it is not necessary to conduct flare work at all on the end portion of the conventional copper pipe, swift piping work can be conducted, working efficiency can be improved, and a strong construction of completed connection is made because the cylindrical compressed deformation sleeve 7, stored within the cap nut 3 and having the concave peripheral groove 9 on the peripheral face 8, is provided, the bottom thin wall portion 13 of concave peripheral groove is formed on an inner portion of the concave peripheral groove 9 in the compressed deformation sleeve 7 in the non-compressed state, and the small protrusion 50 is formed on the sleeve inner peripheral face side of the bottom thin wall portion 13, the bottom thin wall portion 13, receiving compressing force F in axial direction by screwing the cap nut 3, is plastically deformed as to protrude to the radial inner direction with reducing the width dimension W of the concave peripheral groove 9 to 0 to bite into the peripheral face 14 of the inserted copper pipe 40 for stopping the copper pipe 40, and, the small protrusion 50 shows increasing function of anti drawing force to increase resistance against drawing. Further, the number of parts is small, and the configurations of parts are simple. Especially, the anti drawing force is remarkably strong for the co-working of the bottom thin wall portion 13 and the small protrusion 50.

And, the rotation of the pipe 4 or 40 is prevented simultaneously with the plastic deformation of the sleeve 7 receiving the compressing force F in the axial direction, the sealability is prevented from decreasing, and excellent sealing function is shown for a long period of time because the small protrusion 50 is formed with plural notched portions 44 as to be divided along an arc, and the small protrusion 50 is constructed as to show preventing function of pipe rotation in the state biting into the peripheral face 14.

### EXPLANATION OF THE MARKS

- 1: A joint main body (with a male screw)
- 2: A male screw
- 3: A cap nut
- 4: An aluminum pipe
- 7: A compressed deformation sleeve
- 8: A peripheral face
- 9: A concave peripheral groove
- 10: An inner storing space
- 11: An inner peripheral face
- 12: A sealing layer
- 13: A bottom thin wall portion
- 14: A peripheral face
- 22: A sealing groove
- 23: A sealing material
- 24: A cover member
- 40: A copper pipe
- 44: A notched portion
- 45: An area
- 50: A small protrusion
- F: Compressing force (fastening force)
- W: A width dimension

## Claims

1. A pipe joint construction comprising a cap nut (3), a cylindrical compressed deformation sleeve (7), and an inserted aluminum or copper pipe (4, 40) wherein:
the cylindrical compressed deformation sleeve (7), is stored within the cap nut (3) and has a concave peripheral groove (9) on a peripheral face (8), wherein the groove has two side faces (15); and
a bottom thin wall portion (13) of concave peripheral groove is formed on an inner portion of the concave peripheral groove (9) in the compressed deformation sleeve (7); and
the bottom thin wall portion (13), receiving compressing force (F) in axial direction by screwing the cap nut (3), is adapted to be plastically deformed as to protrude to a radial inner direction;
**characterized in that**:
a width dimension (W) between the two side faces (15) of the concave peripheral groove (9) is reduceable to 0, so that the side faces (15) are press-fit, and **in that** the bottom thin wall portion (13) is adapted to bite into a peripheral face (14) of the inserted aluminum or copper pipe (4, 40) for stopping the pipe (4, 40).

2. The pipe joint construction as set forth in claim 1, wherein an inner peripheral face (11) of the compressed deformation sleeve (7) is formed as a smooth peripheral face on an area (45) corresponding to the bottom thin wall portion (13) and its near portion.

3. The pipe joint construction as set forth in claim 1 or 2, provided with a joint main body (1) with a male screw, wherein the cap nut (3) is screwed to the male screw (2) to connect an aluminum pipe (4, 40), wherein a cylindrical compressed deformation sleeve (7) is stored in an inner storing space (10) of the cap nut (3).

4. The pipe joint construction as set forth in claim 3, wherein the compressed deformation sleeve (7) is composed of aluminum or copper covered with aluminum.

5. The pipe joint construction as set forth in claim 3, wherein the compressed deformation sleeve (7) is composed of copper.

6. The pipe joint construction as set forth in any one of claims 1 to 5, wherein the concave groove (9) is U-shaped.

7. The pipe joint construction as set forth in any one of claims 1 to 6, wherein a sealing layer (12) is preliminarily formed unitedly with the inner peripheral face (11) of the compressed deformation sleeve (7) to make tight seal state in the biting.

8. The pipe joint construction as set forth in any one of claims 1 to 7, wherein the compressed deformation sleeve (7) has a sealing groove (22) on the inner peripheral face (11) and a sealing material (23) is set into the sealing groove (22).

9. The pipe joint construction as set forth in any one of claims 1 to 8, wherein a cylindrical cover member (24) for promotion of relative rotational slide is disposed between an inner peripheral face (3B) of the cap nut (3) and a peripheral face of the compressed deformation sleeve (7).

10. The pipe joint construction as set forth in any one of claims 1 to 9, **characterized by** that:
wherein a small protrusion (50) is formed on a sleeve inner peripheral face side of the bottom thin wall portion (13); and
the small protrusion (50) shows increasing function of anti drawing force to increase resistance against drawing.

11. The pipe joint construction as set forth in claim 10, wherein the small protrusion (50) is formed with plural notched portions (44) as to be divided along an arc, and the small protrusion (50) is constructed as to show preventing function of pipe rotation in the state biting into the peripheral face (14).

## Patentansprüche

1. Rohrverbindungsaufbau, der eine Hutmutter (3), eine zylindrische komprimierte Verformungshülse (7) und ein eingesetztes Aluminium- oder Kupferrohr (4, 40) umfasst, wobei:
die zylindrische komprimierte Verformungshülse (7) innerhalb der Hutmutter (3) gelagert ist und eine konkave Umfangsnut (9) auf einer Umfangsfläche (8) aufweist, wobei die Nut zwei Seitenflächen (15) aufweist; und
ein dünner Bodenwandabschnitt (13) der konkaven Umfangsnut auf einem inneren Abschnitt der konkaven Umfangsnut (9) in der komprimierten Verformungshülse (7) gebildet ist; und
der dünne Bodenwandabschnitt (13), der Kompressionskraft (F) in axiale Richtung durch Zuschrauben der Hutmutter (3) empfängt, angepasst ist, um plastisch verformt zu werden, um zu einer radialen inneren Richtung vorzuragen;
**dadurch gekennzeichnet, dass**:
ein Breitenmaß (W) zwischen den zwei Seitenflächen (15) der konkaven Umfangsnut (9) auf 0 reduzierbar ist, so dass die Seitenflächen (15) pressgepasst sind, und dadurch, dass der dünne Bodenwandabschnitt (13) angepasst ist, um in eine Umfangsfläche (14) des eingesetzten Aluminium- oder Kupferrohrs (4, 40) zu beißen, um das Rohr (4, 40) zu stoppen.

2. Rohrverbindungsaufbau nach Anspruch 1, wobei eine innere Umfangsfläche (11) der komprimierten Verformungshülse (7) als eine glatte Umfangsfläche auf einem Bereich (45) gebildet ist, der dem dünnen Bodenwandabschnitt (13) und seinem nahen Abschnitt entspricht.

3. Rohrverbindungsaufbau nach Anspruch 1 oder 2, der mit einem Verbindungshauptkörper (1) mit einer Schraube versehen ist, wobei die Hutmutter (3) an die Schraube (2) geschraubt ist, um ein Aluminiumrohr (4, 40) zu verbinden, wobei eine zylindrische komprimierte Verformungshülse (7) in einem inneren Lagerraum (10) der Hutmutter (3) gelagert ist.

4. Rohrverbindungsaufbau nach Anspruch 3, wobei die komprimierte Verformungshülse (7) aus Aluminium oder Kupfer, das mit Aluminium bedeckt ist, besteht.

5. Rohrverbindungsaufbau nach Anspruch 3, wobei die komprimierte Verformungshülse (7) aus Kupfer besteht.

6. Rohrverbindungsaufbau nach einem der Ansprüche 1 bis 5, wobei die konkave Nut (9) U-förmig ist.

7. Rohrverbindungsaufbau nach einem der Ansprüche 1 bis 6, wobei eine Dichtschicht (12) vorab vereint mit der inneren Umfangsfläche (11) der komprimierten Verformungshülse (7) gebildet wird, um in dem Biss einen festen Dichtzustand herzustellen.

8. Rohrverbindungsaufbau nach einem der Ansprüche 1 bis 7, wobei die komprimierte Verformungshülse (7) eine Dichtnut (22) auf der inneren Umfangsfläche (11) aufweist, und ein Dichtmaterial (23) in die Dichtnut (22) eingesetzt ist.

9. Rohrverbindungsaufbau nach einem der Ansprüche 1 bis 8, wobei ein zylindrisches Abdeckelement (24) zum Fördern relativen Rotationsgleitens zwischen einer inneren Umfangsfläche (3B) der Hutmutter (3) und einer Umfangsfläche der komprimierten Verformungshülse (7) angeordnet ist.

10. Rohrverbindungsaufbau nach einem der Ansprüche 1 bis 9, **dadurch gekennzeichnet, dass**:
ein kleiner Vorsprung (50) auf einer inneren Umfangsflächenseite der Hülse des dünnen Bodenwandabschnitts (13) gebildet ist; und
der kleine Vorsprung (50) eine zunehmende Funktion einer Anti-Zugkraft zeigt, um einen Widerstand gegen Ziehen zu erhöhen.

11. Rohrverbindungsaufbau nach Anspruch 10, wobei der kleine Vorsprung (50) mit mehreren gekerbten Abschnitten (44) gebildet ist, um entlang eines Bogens geteilt zu sein, und der kleine Vorsprung (50) ausgelegt ist, um eine Funktion zum Verhindern von Rohrdrehung in dem in die Umfangsfläche (14) beißenden Zustand aufzuweisen.

## Revendications

1. Structure de joint de tuyau comprenant un écrou borgne (3), un manchon de déformation compressé cylindrique (7) et un tuyau inséré en aluminium ou en cuivre (4, 40), dans laquelle :
le manchon de déformation compressé cylindrique (7) est stocké à l'intérieur de l'écrou borgne (3) et dispose d'une rainure périphérique concave (9) sur une face périphérique (8), dans laquelle la rainure dispose de deux faces latérales (15) ; et
une section de paroi mince de fond (13) de la rainure périphérique concave est formée sur une section intérieure de la rainure périphérique concave (9) dans le manchon de déformation compressé (7) ; et
la section de paroi mince de fond (13), recevant une force de compression (F) dans une direction axiale en vissant l'écrou borgne (3), est adaptée pour être déformée de manière plastique de manière à faire saillie vers une direction intérieure radiale ;
**caractérisée en ce que**
une dimension de largeur (W) entre les deux faces latérales (15) de la rainure périphérique concave (9) peut être réduite à 0 de sorte que les faces latérales (15) sont ajustées par serrage, et **en ce que**
la section de paroi mince du fond (13) est adaptée pour s'engager avec une face périphérique (14) du tuyau inséré en aluminium ou en cuivre (4, 40) pour stopper le tuyau (4, 40).

2. Structure de joint de tuyau selon la revendication 1, dans laquelle une face périphérique intérieure (11) du manchon de déformation compressé (7) est formée sous la forme d'une face périphérique lisse sur une zone (45) correspondant à la section de paroi mince de fond (13) et sa section proche.

3. Structure de joint de tuyau selon les revendications 1 ou 2, fournie avec un corps principal de joint (1) avec une vis mâle, dans laquelle l'écrou borgne (3) est vissé à la vis mâle (2) pour connecter un tuyau en aluminium (4, 40), dans lequel un manchon de déformation compressé cylindrique (7) est stocké dans un espace de stockage intérieur (10) de l'écrou borgne (3).

4. Structure de joint de tuyau selon la revendication 3, dans laquelle le manchon de déformation compressé (7) est composé d'aluminium ou de cuivre recouvert d'aluminium.

5. Structure de joint de tuyau selon la revendication 3, dans laquelle le manchon de déformation compressé (7) est composé de cuivre.

6. Structure de joint de tuyau selon l'une quelconque des revendications 1 à 5, dans laquelle la rainure concave (9) est en forme de U.

7. Structure de joint de tuyau selon l'une quelconque des revendications 1 à 6, dans laquelle une couche d'étanchéité (12) est formée au préalable conjointement avec la face périphérique intérieure (11) du manchon de déformation compressé (7) pour rendre l'étanchéité hermétique lors de l'engagement.

8. Structure de joint de tuyau selon l'une quelconque des revendications 1 à 7, dans laquelle le manchon de déformation compressé (7) comprend une rainure d'étanchéité (22) sur la face périphérique intérieure (11) et un matériau d'étanchéité (23) est placé dans la rainure d'étanchéité (22).

9. Structure de joint d'étanchéité selon l'une quelconque des revendications 1 à 8, dans laquelle un élément de recouvrement cylindrique (24) pour favoriser un coulissement par rotation relatif est disposé entre une face périphérique intérieure (3B) de l'écrou borgne (3) et une face périphérique du manchon de déformation compressé (7).

10. Structure de joint de tuyau selon l'une quelconque des revendications 1 à 9, **caractérisée en ce que** :
une petite partie faisant saillie (50) est formée sur un côté de face périphérique intérieure de manchon de la section de paroi mince de fond (13) ; et
la petite partie faisant saillie (50) affiche une fonction croissante de la force anti-adhérence pour augmenter la résistance à l'encontre de l'adhérence.

11. Structure de joint de tuyau selon la revendication 10, dans laquelle la petite partie faisant saillie (50) est formée avec une pluralité de portions entaillées (44) de manière à être divisée le long d'un arc, et la petite partie faisant saillie (50) est structurée pour afficher une fonction de prévention de rotation de tuyau dans l'état s'engageant dans la face périphérique (14).
